(19) Europäisches Patentamt
European Patent Office
Office européen des brevets

(11) **EP 2 127 006 B1**

(12) **EUROPÄISCHE PATENTSCHRIFT**

(45) Veröffentlichungstag und Bekanntmachung des Hinweises auf die Patenterteilung:
**17.09.2014   Patentblatt 2014/38**

(21) Anmeldenummer: **07856383.0**

(22) Anmeldetag: **05.12.2007**

(51) Int Cl.:
*H01M 8/04* (2006.01)        *H01M 8/10* (2006.01)
*H01M 8/18* (2006.01)

(86) Internationale Anmeldenummer:
**PCT/EP2007/010555**

(87) Internationale Veröffentlichungsnummer:
**WO 2008/080494 (10.07.2008 Gazette 2008/28)**

(54) **VERFAHREN ZUR ELEKTROCHEMISCHEN AKTIVIERUNG VON BRENNSTOFFZELLEN**

METHOD FOR ELECTROCHEMICAL ACTIVATION OF FUEL CELLS

PROCÉDÉ POUR L'ACTIVATION ÉLECTROCHIMIQUE DE PILES À COMBUSTIBLE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.12.2006   DE 102006061225**

(43) Veröffentlichungstag der Anmeldung:
**02.12.2009   Patentblatt 2009/49**

(73) Patentinhaber:
• **Forschungszentrum Jülich GmbH**
  **52425 Jülich (DE)**
• **Rheinisch-Westfälische Technische Hochschule Aachen (RWTH)**
  **52062 Aachen (DE)**

(72) Erfinder:
• **WIPPERMANN, Klaus**
  **52428 Jülich (DE)**
• **SCHMITZ, Heinz**
  **52428 Jülich (DE)**
• **MERGEL, Jürgen**
  **52428 Jülich (DE)**
• **KULIKOVSKY, Andrei**
  **52385 Nideggen-Abenden (DE)**

• **SAUER, Uwe**
  **52080 Aachen (DE)**
• **FRICKE, Birger**
  **52074 Aachen (DE)**
• **SANDERS, Tilman**
  **52080 Aachen (DE)**

(74) Vertreter: **Jostarndt, Hans-Dieter**
**Jostarndt Patentanwalts-AG**
**Brüsseler Ring 51**
**52074 Aachen (DE)**

(56) Entgegenhaltungen:
**US-A1- 2006 014 060**

• YE Q ET AL: "Electrolytic hydrogen evolution in DMFCs induced by oxygen interruptions and its effect on cell performance" ELECTROCHEMICAL AND SOLID-STATE LETTERS, THE SOCIETY, PENNINGTON, NJ, US, Bd. 8, Nr. 4, 1. März 2005 (2005-03-01), Seiten A211-A214, XP003003047 ISSN: 1099-0062
• KULIKOVSKY ET AL: "DMFC: Galvanic or electrolytic cell?" ELECTROCHEMISTRY COMMUNICATION, ELSEVIER, AMSTERDAM, NL, Bd. 8, Nr. 5, 4. April 2006 (2006-04-04), Seiten 754-760, XP005424801 ISSN: 1388-2481

**Beschreibung**

Die Erfindung betrifft ein Verfahren zur elektro-chemischen Aktivierung von Brennstoffzellen, insbesondere von Direkt-Methanol-Brennstoffzellen.

Stand der Technik

Die aktivierende Wirkung einer Sauerstoffverarmung an der Kathode wurde von Wissenschaftlern in Los Alamos / USA bereits erkannt und kürzlich publiziert [Christian Eickes, Piotr Piela, John Davey and Piotr Zelenay, ,Recoverable Cathode Performance Loss in Direct Methanol Fuel Cells', Journal of The Electrochemical Society, 153/1 (2006) A171-A178].

Das dort als "air break"-Methode beschriebene Verfahren funktioniert in einer Abfolge von 4 sequentiellen Schritten: 1. Stopp der Luftzufuhr auf der Kathodenseite, 2. Sofortiges Umschalten in einen galvanostatischen Betriebsmodus, bei dem der gleiche Strom eingestellt wird, der im Augenblick des Umschaltens erzeugt wurde, 3. Anschalten der Luftzufuhr, sobald eine kritische minimale Zellspannung erreicht wird, 4. Sofortiges Umschalten zum potentiostatischen Betriebsmodus.

Eickes et al. (s.o.) wenden in ihrem Experiment das Aktivierungsverfahren alle 10 Minuten an und unterbrechen den Luftstrom jeweils für 13 Sekunden. Die Stromdichte und damit die Zellleistung steigen nach jeder Aktivierung bei den entsprechenden Versuchsbedingungen um ca. 15 % an. Die Autoren führen den Aktivierungseffekt auf eine Reduktion des Platinoxids an der Kathode zurück, das sich bei Brennstoffzellenbetrieb auf der Katalysatoroberfläche bildet und die Katalyse der Sauerstoffreduktion beeinträchtigt. Die Reduktion erfolgt aufgrund des niedrigen Kathodenpotentials während der Aktivierungsperiode von 13 s.

In dieser Veröffentlichung werden keine Aussagen über ein Elektrolyseregime oder bi-funktionales Regime getroffen und es werden auch keine möglichen Aktivierungseffekte durch Elektrolyse diskutiert.

Ein weiterer Stand der Technik wird durch die Veröffentlichung von YE Q ET AL: " Electrolytic hydrogen evolution in DMFCs induced by oxygen interruptions and its effect on cell performance" Electrochemical And Solid-State Letters, The Society, Pennigton, NJ, US, Bd. 8, Nr. 4, 1.März 2005, Seiten A211 - A214 gebildet. Dort ist ein Verfahren beschrieben, bei dem eine Brennstoffzelle teilweise während des galvanischen Betriebs im Elektrolyseregime betrieben und dadurch aktiviert wird. Dies kann durch Unterbrechung der Sauerstoffzufuhr oder mit Hilfe einer externen Stromquelle erfolgen, mit der die Brennstoffzelle zumindest kurzzeitig als Elektrolysezelle betrieben wird.

Aufgabe und Lösung

Die Aufgabe der Erfindung ist, eine Brennstoffzelle, insbesondere eine Direkt-Methanol-Brennstoffzelle effektiv zu betreiben. Insbesondere ist es wünschenswert, sie effektiver zu betreiben, als es bislang nach dem Stand der Technik möglich ist.

Die Aufgabe wird gelöst durch die Bereitstellung eines Verfahrens zum Betreiben einer Brennstoffzelle gemäß dem Hauptanspruch 1 sowie durch zur Verfügung-Stellung einer neuen Brennstoffzelle gemäß dem Nebenanspruch 10. Vorteilhafte Ausführungsformen des Verfahren und der Brennstoffzelle sind Gegenstand der vorliegenden Beschreibung und der Unteransprüche.

Gegenstand der Erfindung

Die Erfindung beinhaltet, dass die Stromerzeugung und damit die Leistung einer Brennstoffzelle durch kurzfristige Aktivierung einzelner Brennstoffzellen oder Teilen von Brennstoffzellen gesteigert werden kann.

Unter Aktivierung der Brennstoffzelle im Sinne der Erfindung sind insbesondere Vorgänge während ihres Betriebs gemeint. Insbesondere handelt es sich hierbei um Betriebszustände, bei denen in wenigstens einem Zellbereich Strom verbraucht wird.

Hierdurch kann die Erfindung von dem bekannten Herstellungsktivierungsprozess unterschieden werden. Der bekannte Herstellungsktivierungsprozess erfolgt als letzter Schritt der Herstellung von Hochtemperatur-Brennstoffzellen SOFC (Solid Oxide Fuel Cell). Dieser Herstellungsktivierungsprozess beeinflusst die spätere Leistungsfähigkeit und Lebensdauer der Zellen.

Mit Aktivierung im Sinne dieser Erfindung ist gemeint, dass die Brennstoffzelle oder Teile der Brennstoffzelle während des Betriebs aktiviert werden. Dies bewirkt, dass ein Alterungsprozess, dem eine Brennstoffzelle in der Regel unterliegt, zumindest teilweise kompensiert, teilweise sogar auch überkompensiert werden kann.

Die Erfindung beinhaltet einen Mechanismus zur Aktivierung, der auf einer Verbesserung der elektrochemischen Aktivität des Katalysators und/oder auch einer Verbesserung des Massentransportes in den Katalysatorschichten zu Grunde liegen.

Die Erfindung sieht vor, eine Brennstoffzelle oder zumindest Teile einer Brennstoffzelle während des üblichen galvanischen Betriebs, bei dem die Brennstoffzelle Strom erzeugt, für einen kurzen Zeitraum im Elektrolyseregime zu betreiben wobei die Richtung des Durchflusses des Oxidationsmittels periodisch umgekehrt wird.

Dies bedeutet, dass in wenigstens einem Teil der Brennstoffzelle oder der gesamten Brennstoffzelle kurzfristig Elektrolyse, d. h. Wasserzersetzung unter Stromverbrauch stattfindet.

In einer vorteilhaften Ausführung des erfindungsgemäßen Verfahrens wird eine Brennstoffzelle mit einer gegebenenfalls kleinen, vorzugsweise externen Stromquelle versehen. Diese Stromquelle ist dabei in der Lage, die Brennstoffzelle während des Betriebs kurzfristig mit einem Elektrolysestrom zu beaufschlagen. Dieser kann vorteilhaft im Bereich von 1 bis 50 mA/cm$^2$ liegen.

Unter kurzfristig sind insbesondere periodische Zeiträume von 1 Sek bis 100 Sek./. pro Stunde Betriebsdauer alternativ vorzugsweise 0,5 Min. bis 5 Minuten pro Stunde Betriebsdauer zu verstehen.

Es ist zweckmäßig, dass die Brennstoffzelle bei einem geringen Laststrom und unterhalb einer kritischen Oxidationsmittelflussrate betrieben wird, derart, dass sich im Bereich des Oxidationsmitteleinlasses der Brennstoffzelle ein galvanisches Regime einstellt, und dass sich im Bereich des Oxidationsmittelauslasses der Brennstoffzelle ein Elektrolyseregime einstellt.

Die Oxidationsmittelflussrate bezeichnet die Durchflussgeschwindigkeit des Oxidationsmittels an der Kathode. Die Einheit ist typischerweise ml/Minute.

Die kritische Oxidationsmittelflussrate bezeichnet eine kritische Durchflussgeschwindigkeit des Oxidationsmittels an der Kathode, unterhalb derer sich ein bi-funktionales Regime ausbildet und eine Aktivierung stattfindet. Die Einheit ist typischerweise gleichfalls ml/Minute.

In einem Brennstoffzellenstapel könnte die Aktivierung der Zellen prinzipiell entweder zugleich oder einzeln, d. h. sequentiell erfolgen. Die Aktivierung einzelner Zellen wäre allerdings nur dann möglich, wenn man die Luftzufuhr jeder Zelle einzeln regeln könnte. Dies ist aber in der Praxis zu aufwändig, so dass eine gleichzeitige Aktivierung aller Zellen erfolgen muss.

In einer weiteren vorteilhaften Ausführung des erfindungsgemäßen Verfahrens wird eine Brennstoffzelle in einem bidirektionalen Betriebszustand betrieben. Darunter ist zu verstehen, dass ein Teil, insbesondere der vordere Zellbereich, der sich in der Nähe des Oxidationsmitteleinlasses befindet, im galvanischen Regime betrieben wird, d. h. Strom produziert wird. Gleichzeitig wird an dem hinteren Teil der Zelle, der sich in der Nähe des Oxidationsmittelauslasses befindet, Strom zur Wasserstoffentwicklung an der Anode verbraucht. Diesen Betriebszustand nennt man auch das Elektrolyseregime.

Typische bi-direktionale Betriebszustände stellen sich bei einer Direkt-Methanol-Brennstoffzelle beispielsweise dann ein, wenn bei kleinen elektrischen Strömen ein Luftstrom eingestellt wird, der gleich oder unterhalb des kritischen Luftstroms liegt.

Die kritische Luftdurchflussrate $f_{crit}$, bei der ein negativer (Elektrolyse-) Strom am Ausgang des Luftkanals auftritt, kann mit folgender Gleichung berechnet werden:

$$f_{crit} = \frac{A\,(J_{cross} + J)}{4F c_{ox}^0}$$

Hier ist $A$ die aktive Zellfläche (cm$^2$) , $J_{cross}$ = $6FN_{cross}$ die durchschnittliche, äquivalente Stromdichte der Methanolpermeation (A cm$^{-2}$), $N_{cross}$ der durchschnittliche molare Methanolfluss durch die Membran (mol cm$^{-2}$ s$^{-1}$), $J$ die mittlere Stromdichte in der Zelle (A cm$^{-2}$), F die Faradaykonstante (9.65' 10$^4$ Coulomb mol$^{-1}$) und $c_{ox}^0$ die molare Sauerstoffkonzentration am Einlass des Luftkanals (mol cm$^{-3}$).

Für die in Tabelle 1 angegebenen Parameter erhält man beispielsweise *für A* = 100 cm$^2$, $J_{cross}$ = 0,1 A cm$^{-2}$, $J$ = 0,2 A cm$^{-2}$ und $c_{ox}^0$ = $7,22*10^{-6}$ mol cm$^{-3}$ für die Durchflussrate $f_{crit}$ » 11 cm$^3$ s$^{-1}$ entsprechend 660 ml min$^{-1}$.

Der $c_{ox}^0$ -Wert in Tab. 1 entspricht atmosphärischem Druck bei einer Temperatur von 350 K.

Als Fazit der bisherigen Untersuchungen lässt sich die Erfindung wie folgt zusammenfassen:

■ Der Energieverlust bei der erfindungsgemäß angestrebten Elektrolyse ist nahezu vernachlässigbar, d. h. es resultiert ein Saldogewinn von annähernd 100 %. Der Saldogewinn entspricht dem verbleibenden Energiegewinn bei Aktivierung nach Abzug des prozentualen Anteils der aufgewendeten elektrischen Energie während der Elektrolyse. Die Energiegewinne und -verluste lassen sich aus den Ladungsmengen errechnen, die in der Periode zwischen zwei Aktivierungszyklen gewonnen werden bzw. während der Elektrolyse aufgewendet werden.

■ Für den Fall einer Aktivierung durch Erniedrigung des Luftdurchflusses anstelle externer Elektrolyse ist der geschätzte Energieverlust noch geringer, da nur ein kleiner elektrischer Strom zur Änderung der Massenflüsse und der Stromdichte fließt. Daher ist ebenfalls ein Saldogewinn von annähernd 100 % zu erwarten.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1 eine schematische Darstellung einer Direkt-Methanol-Brennstoffzelle (DMFC);

Fig. 2 eine Strom/Spannungscharakteristik einer nicht erfindungsgemäßen Direkt-Methanol-Brennstoffzelle;

Fig. 3 in Teilbildern 3 (a) und (b) eine erfindungsgemäße Ausführungsform einer internen elektrochemischen Selbstaktivierung einer Direkt-Methanol-Brennstoffzelle;

Fig. 4 eine weitere Ausführungsform einer nicht erfindungsgemäßen Aktivierung in einer segmentierten Einzelkanalzelle und

Fig. 5 eine nicht erfindungsgemäße Aktivierung in einer quadratischen Zelle mit Füßchenstruktur der Gasverteilerplatte.

Spezieller Beschreibungsteil

Nachfolgend werden bevorzugte Ausführungsformen der Erfindung anhand von Ausführungsbeispielen sowie der Figuren und einer Tabelle beispielhaft erläutert, ohne dass der Gegenstand der Erfindung dadurch beschränkt wird.

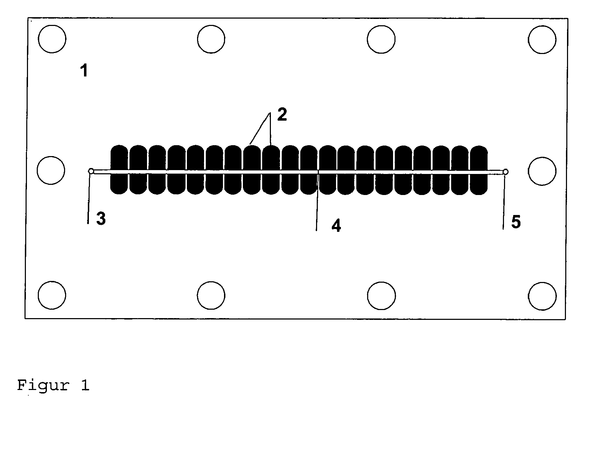

In Figur 1 ist das Schema einer Direkt-Methanol-Brennstoffzelle (DMFC) dargestellt, bei der die Medienverteilung an Anode und Kathode jeweils über einen Kanal erfolgt und die Stromableitung entlang des Kanals in 20 voneinander isolierte Graphitsegmente unterteilt ist. Hier ist beispielhaft zu sehen die Medienverteilung auf der Anodenseite. Mit Hilfe von Platinentechnik lassen sich auf diese Weise Stromverteilungen in der Brennstoffzelle entlang des Kanals messen.

Die DMFC enthält eine Membran-Elektroden-Einheit(Membrane-Electrode-Assembly) bestehend aus wenigstens einer Membran, wenigstens einer Katalysatorschicht und wenigstens einer Diffusionsschicht. Jede dieser Schichten erfüllt in der DMFC spezielle Aufgaben zu. Das Zusammenspiel der Schichten in der MEA wird anhand beabsichtigter Einsatzgebiete gewählt. Anhand einer Anforderungsliste werden die Herstellungsparameter und die geeignetsten Materialien für den Fertigungsprozess der Schichten ausgewählt. Die so entwickelte MEA kann dann in einer Reihe von Testständen in Bezug auf ihre Leistungsfähigkeit getestet werden.

Vorzugsweise enthält die in Fig.1 dargestellte Brennstoffzelle eine Polysulfonplatte 1, Graphitsegmente 2, einen Kanaleinlass 3, einen Strömungskanal 4 und einen Kanalauslass 5.

Erfindungsgmäß wird ferner eine DMFC bereitgestellt, die sich mit geringem Produktionsaufwand herstellen lässt und bei der eine spezifische Leistung erhöht und eine Langzeitstabilität verbessert sind.

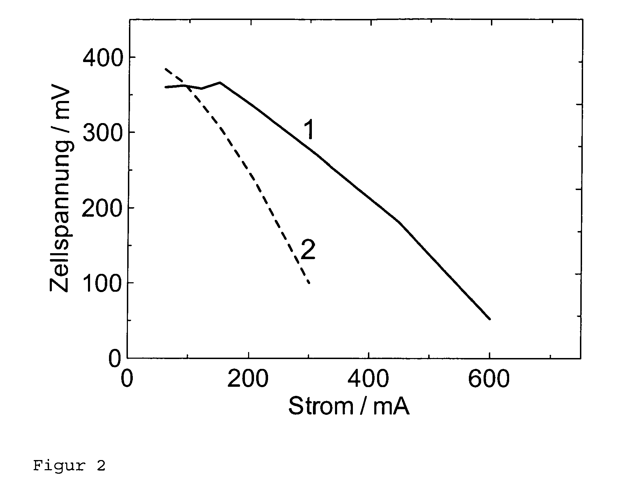

Figur 2 stellt eine gemessene Strom/Spannungscharakteristik einer nicht erfindungsgemäßen Direkt-Methanol-Brennstoffzelle vor und nach einer Aktivierung dar. Das Versuchsergebnis zeigt, dass die Zellleistung deutlich verbessert werden kann, wenn jedes einzelne Segment jeweils 10 Sekunden mit einer externen Stromquelle bei einem kleinen Elektrolysestrom von ca. 2 mA betrieben wird. Die Elektrolyse führt also zu einer Aktivierung der Zelle.

Hierbei bezeichnen die Kurven:

1: eine Strom/Spannungs-Charakteristik vor der Aktivierung
2: eine Strom/Spannungs-Charakteristik nach der Aktivierung.

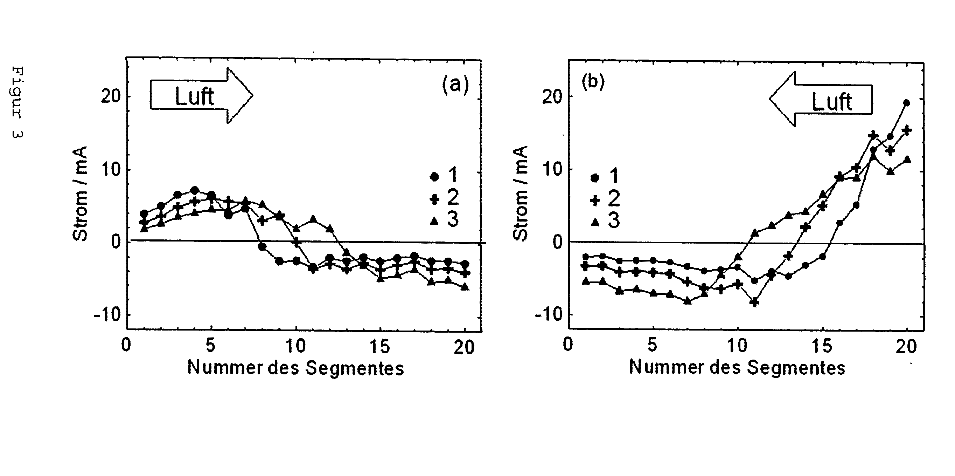

In den Figuren 3 (a) und (b) ist eine erfindungsgemäße Ausführungsform der internen elektrochemischen Selbstaktivierung einer Direkt-Methanol-Brennstoffzelle wiedergegeben, die erfolgt, wenn man während des Brennstoffzellenbetriebs die Brennstoffzelle mit einem geringen Laststrom und kleiner Durchflussrate betreibt. Bei diesen Bedingungen befindet sich die Brennstoffzelle in einem bi-funktionalen Betriebszustand, d. h. der vordere Zellbereich in der Nähe des Lufteinlasses erzeugt Strom (galvanisches Regime), während der restliche, hintere Zellbereich Strom zur Wasserstoffentwicklung an der Anode verbraucht (Elektrolyseregime).

Dargestellt sind in den Figuren 3(a) und (b) die Verteilungen des lokalen Stroms entlang des Luftkanals für drei Luftdurchflussraten mit beispielsweise:

1: Luftdurchflussrate = 1 ml/min.
2: Luftdurchflussrate = 2 ml/min.
3: Luftdurchflussrate = 3 ml/min.

Fig. 3(a) zeigt, dass die Segmente 1 bis 7 im galvanischen Regime betrieben werden, d. h. sie produzieren Strom, erkennbar an den positiven Stromwerten. Die Segmente 13 bis 20 in der Figur 3(a) befinden sich bei allen drei eingestellten Luftdurchflussraten im Elektrolyseregime, erkennbar an den negativen Stromwerten. Mit sinkender Luftdurchflussrate dehnt sich das Elektrolyseregime immer mehr in Richtung des Lufteinlasses aus bis zu Segment 8 bei kleinstem Durchfluss von 1 ml/min.

Die aktivierende Wirkung der Elektrolyse wird in Figur 3(b) deutlich, wenn man die Richtung des Luftdurchflusses umkehrt, d. h. die Luft vor Segment 20 einlässt. Bei Änderung bzw. Umkehr der Richtung des Luftdurchflusses durch die Zelle befinden sich nunmehr die ersten Segmente im Elektrolyseregime, während die hinteren Segmente im galvanischen Regime betrieben werden. Auffällig ist, dass die aktivierten Segmente 8 bis 20, die vormals im Elektrolysebetrieb betrieben wurden, im Vergleich nunmehr einen wesentlich höheren Strom produzieren als die nicht aktivierten Segmente 1 bis 7 in Figur 3(a).

Als Ursache für die Aktivierung könnte eine Verbesserung der elektrochemischen Aktivierung eines oder beider Katalysatoren und/oder des Massentransports in den Katalysatorschichten der Direkt-Methanol-Brennstoffzelle in Betracht kommen.

Im Rahmen der Erfindung wurde ferner gefunden, dass die Aktivierung der Brennstoffzelle u. a. auch von der Einzelzellgeometrie der Brennstoffzelle abhängen kann. So hat sich unter praxisnahen Bedingungen herausgestellt, dass der Aktivierungseffekt in einer Einkanalzelle deutlich früher abklingt als bei einer quadratischen Zelle. Die Tabellen listen einige Versuchsergebnisse zur Aktivierung (Tabelle 1) und zur Energiebilanz (Tabelle 2) dieser beiden als Grenzfälle zu betrachtenden Zellen auf, die gleichzeitig auch als obere und untere Grenze für diese Werte gelten können.

Auf Basis dieser Ergebnisse werden daher für die Aktivierung folgende Bereichsangaben vorgeschlagen:

- Aktivierungsdauer: $t_{act}$ = 10 - 500 s
- Intervalldauer: $t_{int}$ = 0,5 - 200 h

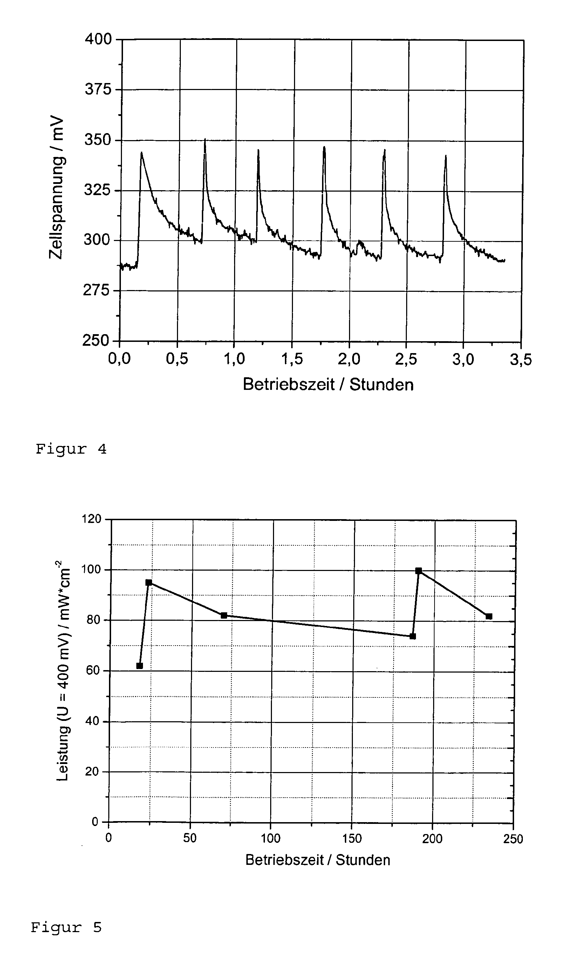

In der Figur 4 wird eine weitere Ausführungsform einer nicht erfindungsgemäßen Aktivierung in einer segmentierten Einzelkanalzelle (siehe Tabelle 1) vorgestellt. Bei diesem Experiment wurde die Membran-Elektrodeneinheit (MEA) dieser Brennstoffzelle durch periodisches Absenken des Luftstromes von 7 ml/min auf 3 ml/min und Verringerung des Laststromes von 150 mA auf 10 mA für jeweils 30 Sekunden pro 30 Minuten Intervalldauer betrieben. Das bedeutet, die Zelle wurde im zeitlichen Verhältnis von 1:60 auf Elektrolyseregime geschaltet. Die anfängliche Spannung wird nach jeder Aktivierung zunächst deutlich gesteigert und fällt dann langsam wieder auf den ursprünglichen Wert zurück. Durch geeignete Zeitintervalle kann so die Spannung bzw. Stromerzeugung insgesamt deutlich gesteigert werden. Bei dieser Ausführungsform ist keine Richtungsänderung des Oxidationsmittels gleichfalls möglich, jedoch ebenfalls nicht notwendig.

Eine Richtungsänderung ist zur Erhöhung des Anteils des aktivierten Volumens vorteilhaft, jedoch wie dargelegt, nicht notwendig.

In der Figur 5 wird eine nicht erfindungsgemäße Aktivierung in einer quadratischen Zelle mit Füßchenstruktur der Gasverteilerplatte (siehe Tabelle 1) vorgestellt. In diesem Fall wurde die Membran-Elektroden-Einheit (MEA) dieser Brennstoffzelle durch periodisches Absenken des Luftstromes von 185 ml/min auf 25 ml/min und Verringerung des Laststromes von 2,5 A auf 60 mA für jeweils 400 Sekunden pro 170 Stunden Intervalldauer betrieben. Das bedeutet für diesen Fall, die Zelle wurde im zeitlichen Verhältnis von 1:1530 auf Elektrolyseregime geschaltet. Die anfängliche erhöhte Spannung fällt auch bei diesem Versuch nach der Aktivierung langsam ab, erreicht aber auch nach 170 Stunden noch nicht wieder den ursprünglichen Wert.

In der Anmeldung zitierte Literatur:

[1] A.A.Kulikovsky, H.Schmitz, K.Wippermann, J.Mergel, B. Fricke, T.Sanders, D.U.Sauer. "DMFC: Galvanic or electrolytic cell?". Electrochem. Comm., 8 (2006) 754-760.

Bezugszeichenliste

- Fig.1:

1: Polysulfonplatte
2: Graphitsegmente
3: Kanaleinlass
4: Strömungskanal
5: Kanalauslass

- Fig.2:

1: Strom/Spannungs-Charakteristik vor der Aktivierung
2: Strom/Spannungs-Charakteristik nach der Aktivierung

- Fig.3:

1: Luftdurchflussrate = 1 ml/min.
2: Luftdurchflussrate = 2 ml/min.
3: Luftdurchflussrate = 3 ml/min.

Tabelle 1:

| Messzelle | T / °C | Aktivierung | | | | Betrieb | | | |
|---|---|---|---|---|---|---|---|---|---|
| | | Strom [mA/ cm$^2$] | Luftfluss [ml/min] | Methanol-fluss [ml / Stunde] | Dauer [s] | Strom [mA*cm$^{-2}$] | $\lambda_{Luft}$ | $\lambda_{Methanol}$ | Zeitintervall [h] |
| **a. segmentierte Einkanalzelle** (3 cm$^2$ Elektrodenfläche) | 80 | 3.3 | 3 | 6 | 30 | 50 | 4 | 4 | 0.5 |
| **b. quadratische Zelle** (18 cm$^2$ Elektroden-fläche) | 80 | 3.4 | 25 | 60 | 400 | 142 | 4 | 4 | 170 |

Tabelle 2:

| Messzelle | Aktivierungsfrequenz | | Energiebilanz | | |
|---|---|---|---|---|---|
| | Aktivierungs-dauer $t_{act}$ [s] | Intervalldauer $T_{int}$ [h] | Energiegewinn $E_{BZ}$ [J / cm$^2$] | Energieverlust a. $E_{EZ}$ [J / cm$^2$] | $E_{EZ}$ / $E_{BZ}$ [%] |
| a. segmentierte Einkanalzelle (3 cm$^2$ Elektrodenfläche) | 30 | 0,5 | 4,7 | 0,015 | 0,3 |
| b. quadratische Zelle (18 cm$^2$ Elektrodenfläche) | 400 | 170 | 4320 | 0,2 | 0,005 |

**Patentansprüche**

1. Verfahren zur Aktivierung einer Brennstoffzelle bei dem die Brennstoffzelle ganz oder teilweise während des galvanischen Betriebs periodisch zumindest kurzzeitig in einem Elektrolyseregime betrieben wird,
**dadurch gekennzeichnet,**
**dass** die Richtung des Durchflusses des Oxidationsmittels periodisch umgekehrt wird.

2. Verfahren nach Anspruch 1,
**dadurch gekennzeichnet,**
**dass** die Brennstoffzelle für den Elektrolysebetrieb zumindest kurzzeitig mit einer externen Stromquelle versorgt wird.

3. Verfahren nach einem der Ansprüche 2,
**dadurch gekennzeichnet,**
**dass** die Brennstoffzelle bei einem Elektrolysestrom der externen Stromquelle von max. 50 mA/cm$^2$ versorgt wird.

4. Verfahren nach Anspruch 3,
**dadurch gekennzeichnet,**
**dass** die Brennstoffzelle bei einem Elektrolysestrom der externen Stromquelle von maximal 5 mA/cm$^2$ versorgt wird.

5. Verfahren nach einem der vorangegangen Ansprüche,
**dadurch gekennzeichnet,**
**dass** die Brennstoffzelle bei einem geringen Laststrom und unterhalb einer kritischen Oxidationsmittelflussrate betrieben wird, derart, dass sich im Bereich des Oxidationsmitteleinlasses der Brennstoffzelle ein galvanisches Regime einstellt, und dass sich im Bereich des Oxidationsmittelauslasses der Brennstoffzelle ein Elektrolyseregime einstellt.

6. Verfahren nach einem der vorangegangen Ansprüche, bei dem die Richtung des Durchflusses des Oxidationsmittels periodisch im Bereich von 1 bis 100 s umgekehrt wird.

7. Verfahren nach einem der vorangegangen Ansprüche,
**dadurch gekennzeichnet,**
**dass** die Richtung des Durchflusses des Oxidationsmittels periodisch im Bereich von 30 bis 60 s umgekehrt wird.

8. Verfahren nach einem der vorangegangenen Ansprüche,
**dadurch gekennzeichnet,**
**dass** eine Direkt-Methanol-Brennstoffzelle als Brennstoffzelle eingesetzt wird.

9. Verfahren nach einem der vorangegangenen Ansprüche,
**dadurch gekennzeichnet,**
**dass** wenigstens eine weitere Brennstoffzelle innerhalb eines Brennstoffzellenstapels nach demselben Verfahren aktiviert wird.

**10.** Brennstoffzelle zur Durchführung des Verfahrens nach einem der Ansprüche 1 bis 9,
**dadurch gekennzeichnet,**
**dass** sie ein Mittel zur periodischen Umkehrung der Richtung des Oxidationsmittels zu und aus der Brennstoffzelle enthält.

**11.** Brennstoffzelle nach Anspruch 10,
**dadurch gekennzeichnet,**
**dass** sie externe Stromquelle aufweist, die zumindest kurzfristig zum Betreiben der Brennstoffzelle im Elektrolyseregime geeignet ist.


**Claims**

**1.** A method for the activation of a fuel cell in which, entirely or at times during the galvanic procedure, the fuel cell is operated periodically, at least briefly, in an electrolysis regimen,
**characterized in that**
the direction of flow of the oxidant is periodically reversed.

**2.** The method according to claim 1,
**characterized in that,**
for the electrolysis operation, the fuel cell is supplied, at least briefly, by an external source of power.

**3.** The method according to claim 2,
**characterized in that**
a maximum electrolysis current of 50 mA/cm$^2$ is supplied to the fuel cell by the external source of power.

**4.** The method according to claim 3,
**characterized in that**
a maximum electrolysis current of 5 mA/cm$^2$ is supplied to the fuel cell by the external source of power.

**5.** The method according to one of the preceding claims,
**characterized in that**
the fuel cell is operated at a low load current and below a critical oxidant flow rate in such a way that a galvanic regimen is established in the vicinity of the oxidant inlet of the fuel cell, and **in that** an electrolysis regimen is established in the vicinity of the oxidant outlet of the fuel cell.

**6.** The method according to one of the preceding claims, wherein the direction of flow of the oxidant is reversed periodically at intervals ranging from 1 to 100 seconds.

**7.** The method according to one of the preceding claims,
**characterized in that**
the direction of flow of the oxidant is reversed periodically at intervals ranging from 30 to 60 seconds.

**8.** The method according to one of the preceding claims,
**characterized in that**
a direct methanol fuel cell is used as the fuel cell.

**9.** The method according to one of the preceding claims,
**characterized in that**
at least one additional fuel cell within a fuel cell stack is activated by means of the same method.

**10.** A fuel cell for carrying out the method according to one of claims 1 to 9,
**characterized in that**
it contains a means for periodically reversing the direction of flow of the oxidant into and out of the fuel cell.

**11.** The fuel cell according to claim 10,
**characterized in that**
it has an external source of power that is able to at least briefly operate the fuel cell in the electrolysis regimen.

**Revendications**

1. Procédé d'activation d'une pile à combustible, selon lequel la pile à combustible est exploitée entièrement ou partiellement, pendant le fonctionnement galvanique, périodiquement et au moins brièvement en régime d'électrolyse, **caractérisé en ce que** le sens d'écoulement de l'agent oxydant est inversé périodiquement.

2. Procédé selon la revendication 1, **caractérisé en ce que** la pile à combustible est, pour le fonctionnement en électrolyse, alimentée au moins brièvement par une source de courant externe.

3. Procédé selon la revendication 2, **caractérisé en ce que** la pile à combustible est alimentée avec un courant d'électrolyse de la source de courant externe de 50 mA/cm² au maximum.

4. Procédé selon la revendication 3, **caractérisé en ce que** la pile à combustible est alimentée avec un courant d'électrolyse de la source de courant externe de 5 mA/cm² au maximum.

5. Procédé selon l'une des revendications précédentes, **caractérisé en ce que** la pile à combustible est exploitée avec un courant de charge faible et en-deçà d'un débit critique d'agent oxydant, de telle sorte qu'un régime galvanique s'établit dans la zone d'admission d'agent oxydant de la pile à combustible et qu'un régime d'électrolyse s'établit dans la zone de sortie d'agent oxydant de la pile à combustible.

6. Procédé selon l'une des revendications précédentes, selon lequel le sens d'écoulement de l'agent oxydant est inversé périodiquement dans la plage de 1 à 100 s.

7. Procédé selon l'une des revendications précédentes, **caractérisé en ce que** le sens d'écoulement de l'agent oxydant est inversé périodiquement dans la plage de 30 à 60 s.

8. Procédé selon l'une des revendications précédentes, **caractérisé en ce qu'**est utilisée, en tant que pile à combustible, une pile à combustible à méthanol direct.

9. Procédé selon l'une des revendications précédentes, **caractérisé en ce qu'**au moins une autre pile à combustible est activée selon le même procédé dans un empilement de piles à combustible.

10. Pile à combustible permettant d'exécuter le procédé selon l'une des revendications 1 à 9, **caractérisée en ce qu'**elle contient un moyen permettant l'inversion périodique du sens d'écoulement de l'agent d'oxydation vers et à partir de la pile à combustible.

11. Pile à combustible selon la revendication 10, **caractérisée en ce qu'**elle présente une source de courant externe qui est adaptée, au moins brièvement, pour exploiter la pile à combustible en régime d'électrolyse.

Figur 1

Figur 2

Figur 3

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHRISTIAN EICKES ; PIOTR PIELA ; JOHN DAVEY ; PIOTR ZELENAY.** Recoverable Cathode Performance Loss in Direct Methanol Fuel Cells. *Journal of The Electrochemical Society,* 2006, vol. 153 (1), A171-A178
- Electrolytic hydrogen evolution in DMFCs induced by oxygen interruptions and its effect on cell performance. **VON YE Q et al.** Electrochemical And Solid-State Letters. The Society, 01. Marz 2005, vol. 8, A211-A214
- **A.A.KULIKOVSKY ; H.SCHMITZ ; K.WIPPERMANN ; J.MERGEL ; B. FRICKE ; T.SANDERS ; D.U.SAUER.** DMFC: Galvanic or electrolytic cell?. *Electrochem. Comm.,* 2006, vol. 8, 754-760